# EUROPEAN PATENT APPLICATION

(11) **EP 4 227 268 A1**
(43) Date of publication of application: **16.08.2023**
(21) Application number: 22778462.6
(22) Date of filing: 04.03.2022
(51) Int. Cl.: C01G 53/00, C01B 19/02, H01M 4/131, H01M 4/36, H01M 4/505, H01M 4/525, H01M 4/62, H01M 10/0525

(54) **SINGLE-CRYSTAL HIGH-NICKEL POSITIVE ELECTRODE MATERIAL, PREPARATION METHOD THEREFOR, AND APPLICATION THEREOF**

(30) Priority: 30.03.2021 CN 202110341692
(71) Applicant: SVOLT ENERGY TECHNOLOGY CO., LTD, Changzhou, Jiangsu 213200 (CN)
(72) Inventor: XU, Xinpei, hangzhou, Jiangsu 213200 (CN); JIANG, Weijun, hangzhou, Jiangsu 213200 (CN); CHEN, Sixian, hangzhou, Jiangsu 213200 (CN); ZHENG, Xiaoxing, hangzhou, Jiangsu 213200 (CN)
(74) Representative: Cabinet Beaumont
(86) International application number: PCT/CN2022/079182
(87) International publication number: WO 2022/206278

(57) **Abstract**

Provided is a preparation method for a cobalt-free positive electrode material, comprising the following steps: (1) mixing a lithium source, a precursor NiₓMn_{y}(OH)₂, and a dopant, and performing primary heat treatment to obtain a matrix material; and (2) mixing the matrix material obtained in step (1) with a coating agent, and performing secondary heat treatment to obtain the cobalt-free positive electrode material, the dopant being a low-melting-point material. Also provided are a cobalt-free positive electrode material prepared by the preparation method, a positive electrode pole piece comprising the cobalt-free positive electrode material, and a lithium-ion battery comprising the positive electrode pole piece. By doping the low-melting-point material in the matrix material, the compactness of the cobalt-free positive electrode material can be improved, thereby reducing gas production, and improving the cycle performance of the material.

## Description

### TECHNICAL FIELD

The present disclosure relates to the field of lithium-ion batteries, for example, a cobalt-free positive electrode material and a preparation method therefor and an application thereof.

### BACKGROUND

Lithium-ion batteries have been widely used in all aspects of life because of their high energy density and good cycle performance. Positive electrode material is the core of lithium-ion batteries, and the development process of positive electrode materials directly affects the development prospect of lithium-ion batteries. Ternary positive electrode materials such as NCM (NiₓCo_{y}Mn_{z}) and NCA (NiₓCo_{y}Al_{z}) have high density and good cycle life, and are widely used in automobile and electronic industries. However, as a strategic resource, cobalt is not only expensive but also pollutes the environment, which directly limits the development of ternary materials.

Cobalt-free layered positive electrode materials not only get rid of the restriction of cobalt, but also have the advantages of high reversible specific capacity and low price, which are increasingly favored by the energy industry. With the increasing demand for energy in various industries, it is a trend to increase the energy density of positive electrode materials. The most direct method is to increase the content of nickel, but the increase of nickel content will lead to the increase of residual alkali on the surface of materials and the increase of gas production in batteries, which brings risks to the safety of batteries.

### SUMMARY

The present disclosure provides a cobalt-free positive electrode material and a preparation method therefor and an application thereof. The preparation method comprises the following steps: (1) mixing a lithium source, a precursor NiₓMn_{y}(OH)₂ and a dopant, and performing primary heat treatment to obtain a matrix material; and (2) mixing the matrix material obtained in step (1) with a coating agent, and performing secondary heat treatment to obtain the cobalt-free positive electrode material. By doping a low melting point material in the matrix material in the present disclosure, the compactness of the cobalt-free positive electrode material can be improved, thereby reducing gas production and improving the cycle performance of the material; and by arranging the coating layer on the surface of the matrix material, the compactness of the material particles is improved, the structural stability of the material is enhanced, the direct contact of the matrix material with electrolyte is reduced, and the occurrence of side reactions is reduced, thereby improving the cycle performance of the material.

An embodiment of the present disclosure provides a preparation method for a cobalt-free positive electrode material, which comprises the following steps:
(1) mixing a lithium source, a precursor NiₓMn_{y}(OH)₂ and a dopant, and performing primary heat treatment to obtain a matrix material; and
(2) mixing the matrix material obtained in step (1) with a coating agent, and performing secondary heat treatment to obtain the cobalt-free positive electrode material;
wherein the dopant is a low melting point material.

The present disclosure increases the compactness of the positive electrode material by coating and doping one or more of low melting point materials, thereby suppressing gas production, and further improving cycle performance.

In one embodiment, the lithium source comprises lithium hydroxide and/or lithium carbonate.

In one embodiment, the dopant in step (1) comprises selenium and/or tin.

In one embodiment, a mass of the low melting point material is 0.1-1% of a mass of the lithium source and the precursor NiₓMn_{y}(OH)₂, such as 0.1%, 0.3%, 0.5%, 0.7% or 1%, etc.

In one embodiment, a time of the mixing in step (1) is 10-20 min, such as 10 min, 12 min, 14 min, 16 min, 18 min or 20 min, etc.

In one embodiment, a speed of the mixing in step (1) is 2000-3000 rpm, such as 2000 rpm, 2200 rpm, 2400 rpm, 2600 rpm, 2800 rpm or 3000 rpm, etc.

In one embodiment, an atmosphere of the primary heat treatment in step (1) is oxygen.

In one embodiment, a concentration of the oxygen is 90-100%, such as 90%, 92%, 94%, 96%, 98% or 100%, etc.

In one embodiment, a flow rate of the oxygen is 2-20 L/min, such as 2 L/min, 5 L/min, 10 L/min, 15 L/min or 20 L/min, etc.

In one embodiment, a temperature of the primary heat treatment in step (1) is 800-1000°C, such as 800°C, 850°C, 900°C, 950°C or 1000°C, etc.

In one embodiment, a time of the primary heat treatment in step (1) is 8-12 h, such as 8 h, 9 h, 10 h, 11 h or 12 h, etc.

In one embodiment, the coating agent in step (2) comprises any one or a combination of at least two of tin, selenium, nano-aluminum powders, magnesium powders, antimony, gallium or indium.

In one embodiment, a mass ratio of the coating agent to the matrix material is (0.1-2): 100, such as 0.1:100, 0.5:100, 0.8:100, 1:100, 1.5:100 or 2:100, etc.

In one embodiment, a time of the mixing in step (2) is 10-20 min, such as 10 min, 12 min, 14 min, 16 min, 18 min or 20 min, etc.

In one embodiment, a speed of the mixing in step (2) is 2000-3000 rpm, such as 2000 rpm, 2200 rpm, 2400 rpm, 2600 rpm, 2800 rpm or 3000 rpm, etc.

In one embodiment, an atmosphere of the secondary heat treatment in step (2) is oxygen.

In one embodiment, a concentration of the oxygen is 20-100%, such as 20%, 40%, 50%, 60%, 80% or 100%, etc.

In one embodiment, a temperature of the secondary heat treatment in step (2) is 200-700°C, such as 200°C, 300°C, 400°C, 600°C or 700°C, etc.

In one embodiment, a time of the secondary heat treatment in step (2) is 4-8 h, such as 4 h, 5 h, 6 h, 7 h or 8 h, etc.

In one embodiment, sieving is carried out after the secondary heat treatment in step (2).

In one embodiment, a screen for the sieving has a size of 300-400 mesh, such as 300 mesh, 320 mesh, 350 mesh, 380 mesh or 400 mesh, etc.

In one embodiment, the preparation method comprises the following steps:
(1) mixing LiOH, a precursor NiₓMn_{y}(OH)₂ and a dopant, and performing heat treatment at an oxygen concentration of 90-100%, an oxygen flow rate of 2-20 L/min and a temperature of 800-1000°C for 8-12 h to obtain a matrix material; and
(2) mixing the matrix material obtained in step (1) with a coating agent, performing heat treatment at an oxygen concentration of 20-100% and at a temperature of 200-700°C for 4-8 h, and performing sieving with a 300-400 mesh screen to obtain the cobalt-free positive electrode material.

An embodiment of the present disclosure provides a cobalt-free positive electrode material, which is prepared by the aforementioned method.

The low melting point material of, for example, selenium and/or tin is doped in the matrix material in the present disclosure, so that the compactness of the cobalt-free positive electrode material can be improved, and the purposes of reducing gas production and improving the cycle performance of the material are achieved; and the coating layer is arranged on the surface of the matrix material, so that the particle compactness of the material is improved, the structural stability of the material is enhanced, the direct contact of the matrix material with electrolyte is reduced, and the occurrence of side reactions is reduced, thus improving the cycle performance of the material.

In one embodiment, the cobalt-free positive electrode material has a stratified structure with single crystal morphology.

In one embodiment, a median particle size D50 of the cobalt-free positive electrode material is 1-5 µm, such as 1 µm, 2 µm, 3 µm, 4 µm or 5 µm, etc.

In one embodiment, a specific surface area of the cobalt-free positive electrode material is 0.2-0.9 m²/g, such as 0.2 m²/g, 0.4 m²/g, 0.5 m²/g, 0.6 m²/g, 0.8 m²/g or 0.9 m²/g, etc.

In one embodiment, a residual lithium content of the cobalt-free positive electrode material is less than 0.3 wt%, such as 0.3 wt%, 0.25 wt%, 0.2 wt% or 0.15 wt%, etc.

In one embodiment, a free water content of the cobalt-free positive electrode material is less than 200 ppm, such as 2000 ppm, 1800 ppm, 1500 ppm, 1200 ppm or 1000 ppm, etc.

In one embodiment, a pH of the cobalt-free positive electrode material is less than 12, such as 11.9, 11.8, 11.5, 11.2 or 11, etc.

An embodiment of the present disclosure provides a positive electrode sheet, which comprises the cobalt-free positive electrode material.

An embodiment of the present disclosure provides a lithium-ion battery, which comprises the positive electrode sheet.

### BRIEF DESCRIPTION OF DRAWINGS

The accompanying drawings are used to provide a further understanding of the technical solutions herein, constitute a part of the specification, and explain the technical solutions herein together with the embodiments of the present disclosure, but do not constitute a limitation on the technical solutions herein.
FIG. 1 is an SEM image of the cobalt-free positive electrode material in Example 1 of the present disclosure.
FIG. 2 is an enlarged SEM image of the cobalt-free positive electrode material in Example 1 of the present disclosure.
FIG. 3 is an SEM image of the cobalt-free positive electrode material in Comparative Example 1 of the present disclosure.
FIG. 4 is an enlarged SEM image of the cobalt-free positive electrode material in Comparative Example 1 of the present disclosure.
FIG. 5 is a graph showing the comparison of high-temperature cycle gas production between pouch batteries prepared by the cobalt-free positive electrode materials in Example 1 and Comparative Example 1 of the present disclosure.

### DETAILED DESCRIPTION

An embodiment of the present disclosure provides a preparation method for a cobalt-free positive electrode material, which comprises the following steps:
(1) mixing a lithium source, a precursor NiₓMn_{y}(OH)₂ and a dopant, and performing primary heat treatment to obtain a matrix material; and
(2) mixing the matrix material obtained in step (1) with a coating agent, and performing secondary heat treatment to obtain the cobalt-free positive electrode material;
wherein the dopant is a low melting point material.

The present disclosure increases the compactness of the positive electrode material by coating and doping one or more of low melting point materials, thereby suppressing gas production and further improving cycle performance.

In one embodiment, the lithium source comprises lithium hydroxide and/or lithium carbonate.

In one embodiment, the dopant in step (1) comprises selenium and/or tin.

In one embodiment, a mass of the low melting point material is 0.1-1% of a mass of the lithium source and the precursor NiₓMn_{y}(OH)₂, such as 0.1%, 0.3%, 0.5%, 0.7% or 1%, etc.

In one embodiment, a time of the mixing in step (1) is 10-20 min, such as 10 min, 12 min, 14 min, 16 min, 18 min or 20 min, etc.

In one embodiment, a speed of the mixing in step (1) is 2000-3000 rpm, such as 2000 rpm, 2200 rpm, 2400 rpm, 2600 rpm, 2800 rpm or 3000 rpm, etc.

In one embodiment, an atmosphere of the primary heat treatment in step (1) is oxygen.

In one embodiment, a concentration of the oxygen is 90-100%, such as 90%, 92%, 94%, 96%, 98% or 100%, etc.

In one embodiment, a flow rate of the oxygen is 2-20 L/min, such as 2 L/min, 5 L/min, 10 L/min, 15 L/min or 20 L/min, etc.

In one embodiment, a temperature of the primary heat treatment in step (1) is 800-1000°C, such as 800°C, 850°C, 900°C, 950°C or 1000°C, etc.

The temperature of the heat treatment in step (1) will affect the performance of the prepared cobalt-free positive electrode material. By controlling the temperature of the heat treatment in step (1) at 800-1000°C, the cobalt-free positive electrode material with good cycle performance and low gas production can be prepared.

In one embodiment, a time of the primary heat treatment in step (1) is 8-12 h, such as 8 h, 9 h, 10 h, 11 h or 12 h, etc.

In one embodiment, the coating agent in step (2) comprises any one or a combination of at least two of tin, selenium, nano-aluminum powders, magnesium powders, antimony, gallium or indium.

In one embodiment, a mass ratio of the coating agent to the matrix material is (0.1-2):100, such as 0.1:100, 0.5:100, 0.8:100, 1:100, 1.5:100 or 2:100, etc.

The coating amount of the coating agent will affect the performance of the prepared cobalt-free positive electrode material, and the cobalt-free positive electrode material with better effect can be prepared by controlling the coating amount of the coating agent at 0.1-2%.

In one embodiment, a time of the mixing in step (2) is 10-20 min, such as 10 min, 12 min, 14 min, 16 min, 18 min or 20 min, etc.

In one embodiment, a speed of the mixing in step (2) is 2000-3000 rpm, such as 2000 rpm, 2200 rpm, 2400 rpm, 2600 rpm, 2800 rpm or 3000 rpm, etc.

In one embodiment, an atmosphere of the secondary heat treatment in step (2) is oxygen.

In one embodiment, a concentration of the oxygen is 20-100%, such as 20%, 40%, 50%, 60%, 80% or 100%, etc.

In one embodiment, a temperature of the secondary heat treatment in step (2) is 200-700°C, such as 200°C, 300°C, 400°C, 600°C or 700°C, etc.

The temperature of the heat treatment in step (2) will affect the performance of the prepared cobalt-free positive electrode material. By controlling the temperature of the heat treatment in step (2) at 200-700°C, the cobalt-free positive electrode material with good cycle performance and low gas production can be prepared.

In one embodiment, a time of the secondary heat treatment in step (2) is 4-8 h, such as 4 h, 5 h, 6 h, 7 h or 8 h, etc.

In one embodiment, sieving is carried out after the secondary heat treatment in step (2).

In one embodiment, a screen for the sieving has a size of 300-400 mesh, such as 300 mesh, 320 mesh, 350 mesh, 380 mesh or 400 mesh, etc.

In one embodiment, the preparation method comprises the following steps:
(1) mixing LiOH, a precursor NiₓMn_{y}(OH)₂ and a dopant, and performing heat treatment at an oxygen concentration of 90-100%, an oxygen flow rate of 2-20 L/min and a temperature of 800-1000°C for 8-12 h to obtain a matrix material; and
(2) mixing the matrix material obtained in step (1) with a coating agent, performing heat treatment at an oxygen concentration of 20-100% and at a temperature of 200-700°C for 4-8 h, and performing sieving with a 300-400 mesh screen to obtain the cobalt-free positive electrode material.

An embodiment of the present disclosure provides a cobalt-free positive electrode material, which is prepared by the aforementioned method.

In the present disclosure, the low melting point material of selenium and/or tin is doped in the matrix material, so that the compactness of the cobalt-free positive electrode material can be improved, and the purposes of reducing gas production and improving the cycle performance of the material are achieved; and the coating layer is arranged on the surface of the matrix material, so that the particle compactness of the material is improved, the structural stability of the material is enhanced, the direct contact of the matrix material with electrolyte is reduced, and the occurrence of side reactions is reduced, thereby improving the cycle performance of the material.

In one embodiment, the cobalt-free positive electrode material has a stratified structure with single crystal morphology.

In one embodiment, a median particle size D50 of the cobalt-free positive electrode material is 1-5 µm, such as 1 µm, 2 µm, 3 µm, 4 µm or 5 µm, etc.

In one embodiment, a specific surface area of the cobalt-free positive electrode material is 0.2-0.9 m²/g, such as 0.2 m²/g, 0.4 m²/g, 0.5 m²/g, 0.6 m²/g, 0.8 m²/g or 0.9 m²/g, etc.

In one embodiment, a residual lithium content of the cobalt-free positive electrode material is less than 0.3 wt%, such as 0.3 wt%, 0.25 wt%, 0.2 wt% or 0.15 wt%, etc.

In one embodiment, a free water content of the cobalt-free positive electrode material is less than 200 ppm, such as 2000 ppm, 1800 ppm, 1500 ppm, 1200 ppm or 1000 ppm, etc.

In one embodiment, a pH of the cobalt-free positive electrode material is less than 12, such as 11.9, 11.8, 11.5, 11.2 or 11, etc.

An embodiment of the present disclosure provides a positive electrode sheet, which comprises the cobalt-free positive electrode sheet material.

An embodiment of the present disclosure provides a lithium-ion battery, which comprises the positive electrode sheet.

### Example 1

This example provides a cobalt-free positive electrode material, which is prepared by the following method:
(1) 48.00 g of LiOH, 100.00 g of Ni_{0.75}Mn_{0.25}(OH)₂ and 0.2115 g of a selenium powder dopant were mixed, and subjected to a heat treatment at an oxygen concentration of 95%, an oxygen flow rate of 5 L/min and 900°C for 10 h to obtain a matrix material; and
(2) 80.00 g of the matrix material obtained in step (1) was mixed with 0.800 g of a selenium coating agent, subjected to a heat treatment at an oxygen concentration of 50% and 400°C for 6 h, and sieved with a 300 mesh screen to obtain the cobalt-free positive electrode material with a coating amount of 1%.

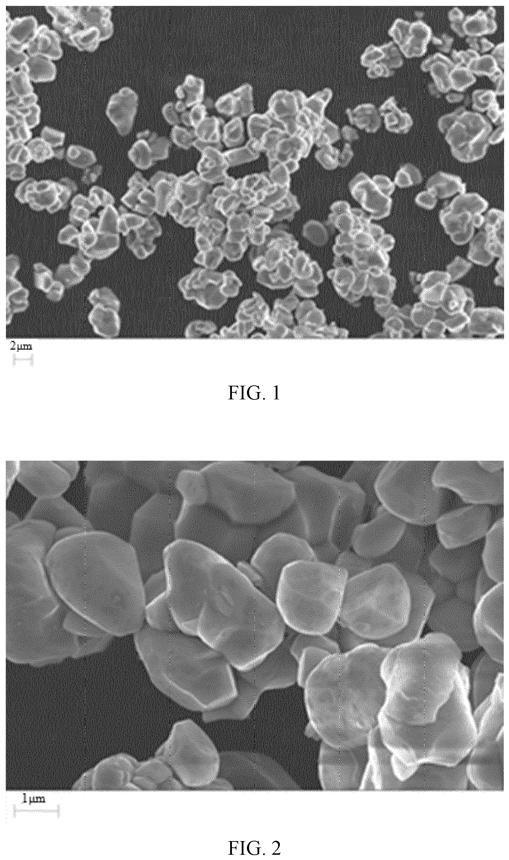

FIGS. 1-2 show the SEM images of the cobalt-free positive electrode material.

### Example 2

This example provides a cobalt-free positive electrode material, which is prepared by the following method:
(1) 42.1874 g of lithium carbonate, 100.00 g of Ni_{0.8}Mn_{0.2}(OH)₂ and 0.2115 g of a tin powder dopant were mixed, and subjected to a heat treatment at an oxygen concentration of 90%, an oxygen flow rate of 8 L/min and 950°C for 9 h to obtain a matrix material; and
(2) 80.00 g of the matrix material obtained in step (1) was mixed with 0.4000 g of a tin coating agent, subjected to a heat treatment at an oxygen concentration of 40% and 500°C for 7 h, and sieved with a 400 mesh screen to obtain the cobalt-free positive electrode material with a coating amount of 0.5%.

### Example 3

The only difference between this example and Example 1 is that a temperature of the heat treatment in step (1) was 800°C, and other conditions and parameters were completely the same as Example 1.

### Example 4

The only difference between this example and Example 1 is that a temperature of the heat treatment in step (1) was 1000°C, and other conditions and parameters were completely the same as Example 1.

### Example 5

The only difference between this example and Example 1 is that a temperature of the heat treatment in step (2) was 200°C, and other conditions and parameters were completely the same as Example 1.

### Example 6

The only difference between this example and Example 1 is that a temperature of the heat treatment in step (1) was 700°C, and other conditions and parameters were completely the same as Example 1.

### Example 7

The only difference between this example and Example 1 is that a mass of selenium in step (3) was 0.08 g, and a cobalt-free material with a coating amount of 0.1% was obtained. Other conditions and parameters were completely the same as those in Example 1.

### Example 8

The only difference between this example and Example 1 is that a mass of selenium in step (3) was 0.16 g, and a cobalt-free material with a coating amount of 2% was obtained. Other conditions and parameters were completely the same as those in Example 1.

### Comparative Example 1

The only difference between this comparative example and Example 1 is that that no coating treatment was not carried out in step (2), and other conditions and parameters were completely the same as those in Example 1.

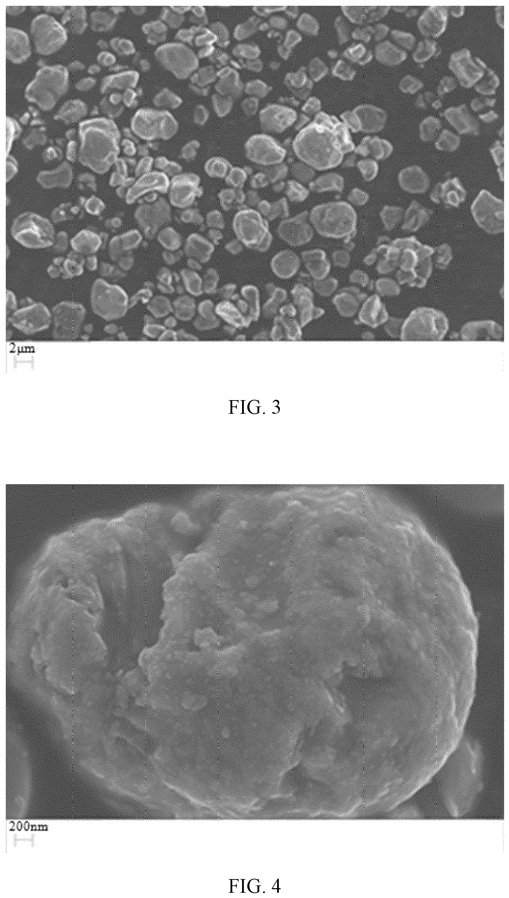

FIGS. 3-4 show the SEM images of the prepared cobalt-free positive electrode material.

### Comparative Example 2

The only difference between this comparative example and Example 1 is only that no selenium was doped in step (1), and other conditions and parameters were completely the same as Example 1.

### Performance test:

The final obtained positive electrode material was subjected to button half-cell charge and discharge tests; specifically, the positive electrode material, PVDF and SP conductive agent were mixed according to a mass ratio of 92:4:4, and NMP was added to adjust a solid content of the slurry to 50%; then the slurry was evenly coated on an aluminum foil and dried at 100°C for 12 h to prepare a whole electrode sheet; then the electrode sheet was cut into original sheets with a diameter of 12 mm, and the battery was assembled in a glove box. The negative electrode was a lithium sheet. The test results are shown in Table 1.

**Table 1**

| | Gas production after 400 cycles (mL/Ah) | Gas production after 800 cycles (mL/Ah) | Capacity retention rate after 50 cycles (%) |
|---|---|---|---|
| Example 1 | 0.02 | 1.36 | 96.2 |
| Example 2 | 0.43 | 3.61 | 94.8 |
| Example 3 | 0.21 | 2.01 | 94.3 |
| Example 4 | 0.02 | 1.73 | 95.7 |
| Example 5 | 0.03 | 1.86 | 94.2 |
| Example 6 | 0.28 | 3.16 | 93.7 |
| Example 7 | 0.73 | 3.37 | 88.92 |
| Example 8 | 0.01 | 1.05 | 97.20 |
| Comparative Example 1 | 0.74 | 4.85 | 87.1 |
| Comparative Example 2 | 0.39 | 3.82 | 86.22 |

As can be seen from Table 1, it can be seen from the comparison of Examples 1-8 that for the battery manufactured by using the cobalt-free positive electrode material provided by an embodiment of the present disclosure, the gas production can be less than or equal to 0.73 mL/Ah after 400 cycles and less than or equal to 3.61 mL/Ah after 800 cycles, and the capacity retention rate can be more than or equal to 88.92% after 50 cycles.

From the comparison of Example 1 and Examples 3-4, it can be seen that the temperature of the heat treatment in step (1) will affect the performance of the prepared cobalt-free positive electrode material. By controlling the temperature of the heat treatment in step (1) at 800-1000°C, the cobalt-free positive electrode material with good cycle performance and low gas production can be prepared.

From the comparison of Example 1 and Examples 5-6, it can be seen that the temperature of the heat treatment in step (2) will affect the performance of the prepared cobalt-free positive electrode material. By controlling the temperature of the heat treatment in step (2) at 200-700°C, the cobalt-free positive electrode material with good cycle performance and low gas production can be prepared.

From the comparison of Example 1 and Examples 7-8, it can be seen that the coating amount of selenium will affect the performance of the prepared cobalt-free positive electrode material. By controlling the coating amount of selenium at 0.1-2%, the cobalt-free positive electrode material with better effect can be prepared.

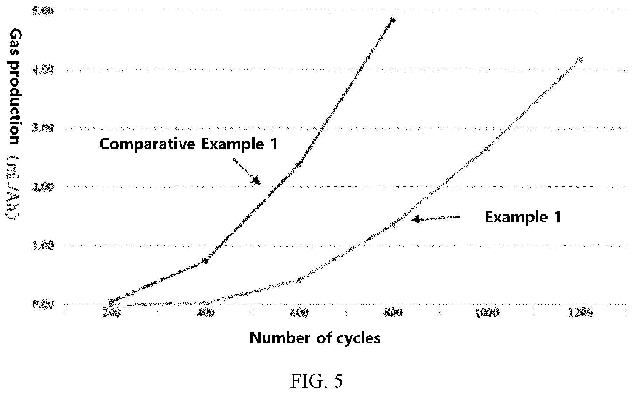

FIG. 5 shows the graph showing the comparison of high-temperature cycle gas production between pouch batteries prepared by the cobalt-free positive electrode materials in Example 1 and Comparative Example 1. From Table 1 and FIG. 5, it can be seen that the coating of selenium improves the compactness of material particles, strengthens the structural stability of the material, reduces the direct contact between the matrix material and electrolyte, and reduces the occurrence of side reactions, thus improving the cycle performance of the material.

From the comparison of Example 1 and Comparative Example 2, it can be seen that the compactness of the cobalt-free positive electrode material can be improved by doping low melting point materials in the matrix material, so as to reduce gas production and improve the cycle performance of the material.

## Claims

1. A preparation method for a cobalt-free positive electrode material, comprising:
(1) mixing a lithium source, a precursor NiₓMn_{y}(OH)₂ and a dopant, and performing primary heat treatment to obtain a matrix material; and
(2) mixing the matrix material obtained in step (1) with a coating agent, and performing secondary heat treatment to obtain the cobalt-free positive electrode material;
wherein the dopant is a low melting point material.

2. The preparation method according to claim 1, wherein the low melting point material in step (1) comprises selenium and/or tin, and a mass of the low melting point material is 0.1-1% of a mass of the lithium source and the precursor NiₓMn_{y}(OH)₂, and the lithium source comprises lithium hydroxide and/or lithium carbonate.

3. The preparation method according to claim 1 or 2, wherein a time of the mixing in step (1) is 10-20 min, and a speed of the mixing is 2000-3000 rpm.

4. The preparation method according to any one of claims 1 to 3, wherein an atmosphere of the primary heat treatment in step (1) is oxygen, a concentration of the oxygen is 90-100%, and a flow rate of the oxygen is 2-20 L/min.

5. The preparation method according to any one of claims 1 to 4, wherein a temperature of the primary heat treatment in step (1) is 800-1000°C, and a time of the primary heat treatment is 8-12 h.

6. The preparation method according to any one of claims 1 to 5, wherein the coating agent in step (2) comprises any one or a combination of at least two of tin, selenium, nano-aluminum powders, magnesium powders, antimony, gallium or indium.

7. The preparation method according to any one of claims 1 to 6, wherein a mass ratio of the coating agent to the matrix material is (0. 1-2): 100.

8. The preparation method according to any one of claims 1 to 7, wherein a time of the mixing in step (2) is 10-20 min, and a speed of the mixing is 2000-3000 rpm.

9. The preparation method according to any one of claims 1 to 8, wherein an atmosphere of the secondary heat treatment in step (2) is oxygen, and a concentration of the oxygen is 20-100%.

10. The preparation method according to any one of claims 1 to 9, wherein a temperature of the secondary heat treatment in step (2) is 200-700°C, a time of the secondary heat treatment is 4-8 h, and after the secondary heat treatment, sieving is carried out, and a screen for the sieving has a size of 300-400 mesh.

11. The preparation method according to any one of claims 1 to 10, wherein the preparation method comprises:
(1) mixing LiOH, a precursor NiₓMn_{y}(OH)₂ and a dopant, and performing heat treatment at an oxygen concentration of 90-100%, an oxygen flow rate of 2-20 L/min and a temperature of 800-1000°C for 8-12 h to obtain a matrix material; and
(2) mixing the matrix material obtained in step (1) with a coating agent, performing heat treatment at an oxygen concentration of 20-100% and at a temperature of 200-700°C for 4-8 h, and performing sieving with a 300-400 mesh screen to obtain the cobalt-free positive electrode material.

12. A cobalt-free positive electrode material, which is prepared by the preparation method according to any one of claims 1 to 11.

13. The cobalt-free positive electrode material according to claim 12, wherein the cobalt-free positive electrode material has a stratified structure with single crystal morphology, a median particle size D50 of the cobalt-free positive electrode material is 1-5 µm, a specific surface area of the cobalt-free positive electrode material is 0.2-0.9 m²/g, a residual lithium content of the cobalt-free positive electrode material is less than 0.3 wt%, a free water content of the cobalt-free positive electrode material is less than 200 ppm, and a pH of the cobalt-free positive electrode material is less than 12.

14. A positive electrode sheet comprising the cobalt-free positive electrode sheet material according to claim 12 or 13.

15. A lithium-ion battery comprising the positive electrode sheet according to claim 14.
